# EUROPEAN PATENT APPLICATION

(11) **EP 4 425 647 A1**
(43) Date of publication of application: **04.09.2024**
(21) Application number: 23159675.0
(22) Date of filing: 02.03.2023
(51) Int. Cl.: H01M 10/613, H01M 10/615, H01M 10/625, H01M 10/637, H01M 10/655, H01M 10/6556

(54) **AN ELECTRIC VEHICLE BATTERY PACK**

(71) Applicant: Polestar Performance AB, 405 31 Gothenburg (SE)
(72) Inventor: MOON, Jongseok, 421 31 Västra Frölunda (SE)
(74) Representative: Zacco Sweden AB

(57) **Abstract**

The present disclosure relates to an electric vehicle battery pack (100), comprising a battery module (107) comprising a plurality of battery cells and a primary thermal regulation unit (104) coupled to the battery module (107). The primary thermal regulation unit (104) is configured to control the cooling and/or heating of said battery cells. Further, the battery pack (100) comprises an auxiliary thermal regulation unit (110) and a first thermal switch (120), the first thermal switch (120) having an open state and a closed state, wherein at said closed state the first thermal switch (120) connects the auxiliary thermal regulation unit (110) to a first thermal source (121) for heating or cooling said battery cells.

## Description

### TECHNICAL FIELD

The present disclosure relates to an electric vehicle battery pack and an electric vehicle comprising such.

### BACKGROUND

Electric vehicles (EV) are becoming increasingly popular as consumers look to decrease their environmental impact. Instead of a traditional internal combustion engine, electric vehicles include one or more motors powered by a rechargeable battery pack, for example known as rechargeable energy storage systems (REESS) or electric vehicle battery. Most battery packs are made up of a plurality of individual battery cells configured to provide electrical power to the one or more motors.

Batteries and cells are important energy storage devices well known in the art. The batteries and cells typically comprise electrodes and an ion conducting electrolyte positioned therebetween. Battery packs that contain lithium-ion batteries are increasingly popular with automotive applications and various commercial electronic devices because they are rechargeable and have no memory effect. Storing and operating the lithium-ion battery at an optimal operating temperature is very important to allow the battery to maintain a charge for an extended period of time.

Due to the characteristics of the lithium-ion batteries, the battery pack may operate within an ambient temperature range of -20° Celsius to 60° Celsius. However, even when operating within these temperature ranges, the battery pack may begin to lose its capacity or ability to charge or discharge should the ambient temperature fall below 0° C or exceed 40° Celsius. Depending on the ambient temperature, the life cycle capacity or charge/discharge capability of the battery may be greatly reduced as the temperature strays from ideal temperature conditions.

Hence, there is a need for controlling the temperature of the battery back to prevent the battery pack from reaching temperatures being at harmful levels or at least reduce the time periods in which the battery pack reaches temperatures being at harmful levels. This may be done by actively heating and cooling the battery pack when or before it reaches said harmful levels.

A common issue with such active heating is that it does not control/regulate the temperature of the battery pack efficiently enough. Generally, it requires an excessive amount of energy input and/or control the temperature at a slower rate than required.

Thus, there is rooms for battery packs to provide thermal regulation, which are improved in efficiency. Specifically, they should require less energy input and/or control the temperature more rapidly compared to solutions in the present art.

### SUMMARY

It is therefore an object of the present disclosure to alleviate at least some of the mentioned drawbacks to provide an electric vehicle battery pack and an electric vehicle that is at least more energy efficient.

This and other objects, which will become apparent in the following, are achieved by the electric vehicle and electric vehicle battery pack as defined in the appended claims.

The present disclosure relates to an electric vehicle battery pack, comprising a battery module comprising a plurality of battery cells. A primary thermal regulation unit coupled to the battery module, wherein the primary thermal regulation unit is configured to control the cooling and/or heating of said battery cells. Further, the EV battery pack comprises an auxiliary thermal regulation unit for providing auxiliary cooling and/or heating of said battery cells. Further, the EV battery pack comprises a first thermal switch, the first thermal switch having an open state and a closed state, wherein the first thermal switch is configured to, upon exceeding a pre-determined first temperature, alternate from one of said states to the other, wherein at said closed state the first thermal switch (conductively) connects the auxiliary thermal regulation unit to a first thermal source for heating or cooling said battery cells.

It should be noted that the EV battery pack may comprise a plurality of such modules, each accommodating a plurality of battery cells.

An advantage of the EV battery pack of the present disclosure is that it allows for a more time efficient and/or energy efficient cooling by the auxiliary thermal regulation unit. Thus, the EV battery pack of the present disclosure increases a thermal regulation efficiency thereof while reducing or at least maintaining power usage. The auxiliary thermal regulation unit permits the primary thermal regulation unit to provide less power to control the heating/cooling of the battery cells and/or it can increase the heating/cooling rate of the battery cells by assisting the primary thermal regulation unit in an energy efficient manner.

In some aspects herein, the EV battery pack further comprises a second thermal switch having an open state and a closed state, wherein the second switch is configured to, upon exceeding a pre-determined second temperature, alternate from one of said states to the other (i.e. from closed to open or from open to closed), wherein at said closed state of the second thermal switch, the second thermal switch connects the auxiliary thermal regulation unit to a second thermal source for heating or cooling said battery cells, wherein the first temperature is different from said second temperature.

In other words, the first thermal switch may be designed to open/close upon exceeding/falling below one temperature (for example if falling below 0 degrees Celsius), whereas the second thermal switch may be designed to open/close upon exceeding/falling below a second temperature different from the first (for example if exceeding 30 degrees Celsius). Hence, the thermal sources may also be different thermal sources associated to different temperatures.

An advantage with this is that the EV battery pack's temperature may be controlled with increased flexibility.

Moreover, the one of the first and the second thermal sources may be a cooling source for cooling the battery cells and wherein the other of the thermal sources may be a heating source for heating the battery cells. However, in some aspects herein, this may vary.

An advantage of this is that the auxiliary thermal regulation unit permits both heating and cooling of said battery pack.

In some aspects herein, the battery pack may comprise a plurality of thermal switches coupled to common or different thermal sources. The thermal switches may be arranged to distribute thermal transfer to different parts of the battery pack thereby providing distributed heat/cooling of said battery cells therein.

The thermal switch may be a bimetal switch. Thus, it may comprise metal elements with different coefficient of thermal expansion. These elements may be arranged to mechanically deform in response to changes in temperature. In other words, the bending/deformation of said may allow for the thermal switch to open/close. Hence, in the present disclosure, the thermal switches may be dimensioned/arranged to open/close at pre-determined/defined temperatures. The closure allows for closing a corresponding circuit to engage (connect) appropriate one or more connectors and thereby providing cooling/heating. For example, conductive cooling. For example, the thermal switch may be arranged close when exceeding the pre-defined temperature and self-reset (open) when falling under the pre-defined temperature (or the other way around). The connectors may be electromagnetic connectors for forming a more secure path between the thermal source and a thermal portion of the auxiliary thermal regulation unit.

The thermal switch may be positioned within the battery pack casing, or in direct contact/thermal communication with the battery pack casing. In some aspects, the thermal switch is associated to the battery pack casing, i.e. close (relative proximity) to the battery pack casing (1-20 cm). In other aspects the thermal switches are associated (or in contact with) the battery module. Thus, allowing for the thermal switch to be able to react to the temperature of the battery cells.

The thermal source may be at least one of ambient air, a vehicle chassis, vehicle frame and electronic elements, electronic elements comprising a rear electronic motor, a DC/DC converter, an on board charger, a high voltage compressor, a front electronic motor, an inverter and any other suitable elements of the electric vehicle.

Thus, the thermal sources may be ambient sources. In some aspects it may be ambient sources that provide passive thermal energy. Accordingly, the thermal sources may be passive thermal sources. Hence, the thermal sources may be ambient sources that passively dissipate thermal energy. An advantage of this is that natural thermal energy that is not actively produced for cooling purposes may be utilized to control the cooling/heating of the battery pack.

The primary thermal regulation unit may comprise one or more conduits through which a thermally regulated medium can flow to affect at least one of active heating or active cooling of the battery cells. The conduit may be pipes or any other type of conduit.

In some aspects herein, a refrigerant can pass through the conduits to affect cooling of said primary thermal regulation unit. Hence, hot and/or warm liquids may pass through the conduits to affect heating/cooling of the primary thermal regulation unit. For improved efficiency, rather than heating or cooling the entire exterior of the primary thermal regulation unit, in some aspects, the primary thermal regulation unit may further comprise one or more contact pads. The contact pads may correspond with one or more thermal transfer surfaces of the one or more battery modules, battery busbar or other components of the battery pack, particularly when the primary thermal regulation unit is in the contact position relative to one or more battery modules. The one or more contact pads may be constructed of a highly conductive material, such as aluminum or other highly thermally conductive material.

The auxiliary thermal regulation unit may comprise a thermal portion and a first regulation track extending from said thermal portion, wherein the first thermal switch is positioned intermediate an end of said first track and a thermal source connector to, at said closed state, form a (thermal) path from the thermal source to said thermal portion.

An advantage of this is that the thermal source may provide heat/cooling to the battery pack even though its located far from the battery pack.

The thermal portion may be one of a heat sink (formed by e.g. metal) associated with (e.g., in direct contact with / in thermal contact with) said battery module, a battery module casing of said module, a part of said battery module casing (provided its a thermally conductive material), the battery cells of the module and a busbar arrangement.

In some aspects herein the battery pack may comprise a plurality of battery modules interconnected by said busbar arrangement.

An advantage of having the casing or busbar arrangement as the thermal portion is that it provides a compact arrangement of the auxiliary thermal regulation unit. Thus, the thermal portion may be the part arranged to dissipate thermal energy (received from the thermal source) to said battery modules/pack/cells.

The end of said first regulation track may comprise a thermal plate insert, the thermal plate insert being fitted to close an opening of a casing of said battery pack. Further, the first thermal switch may be positioned intermediate an outer surface of said thermal plate insert and said thermal source connector.

The auxiliary thermal regulation unit may comprise a thermal portion defined by a busbar arrangement interconnecting said battery modules and a first regulation track extending from said thermal portion, wherein the first thermal switch is positioned intermediate an end of said first track and a thermal source connector to, at said closed state, form a path from the thermal source to said busbar arrangement.

An advantage of this is that it provides a compact structure compared to conventional solutions as the busbar arrangement can be utilized for cooling/heating.

The auxiliary thermal regulation unit and the primary regulation unit may in some aspects herein be positioned to heat and/or cool opposing surfaces of said battery module. Such an arrangement provides space efficiency.

There is also provide an electric vehicle comprising the EV battery pack in accordance with any aspect herein.

Generally, all terms used in the description are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### BRIEF DESCRIPTION OF THE DRAWINGS

These and other features and advantages of the present disclosure will now be further clarified and described in more detail, with reference to the appended drawings;
- Figure 1A: illustrates a side cross-sectional view of at least a part of a battery pack in accordance with some aspects herein;
- Figure 1B: illustrates a side cross-sectional view of another part of a battery pack which may be a continuation of the part shown in Figure 1A in accordance with some aspects herein;
- Figure 2: illustrates an objective view of a battery pack in accordance with some aspects herein;
- Figure 3: illustrates an objective view of a vehicle in accordance with some aspects herein;
- Figure 4A: illustrates schematically thermal switches in the form of a block circuit in accordance with some aspects herein; and
- Figure 4B: illustrates schematically thermal switches in the form of a block circuit in accordance with some aspects herein.

### DETAILED DESCRIPTION

In the following detailed description, some aspects of the present disclosure will be described. However, it is to be understood that features of the different aspects are exchangeable between the aspects and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

Various embodiments of the present disclosure will be described in detail with reference to the drawings, wherein like reference numerals represent like parts and assemblies throughout the several views. Various directions and orientations, such as "upward," "downward," "top," "bottom," "upper," "lower", etc. may be described herein with reference to the drawings in the usual gravitational frame of reference, regardless of how the components may be oriented.

Additionally, the terms "battery," "cell," and "battery cell" may be used interchangeably and may refer to any of a variety of different cell types, chemistries and configurations including, but not limited to, lithium ion (e.g., lithium iron phosphate, lithium cobalt oxide, other lithium metal oxides, etc.), lithium-ion polymer, nickel metal hydride, nickel cadmium, nickel hydrogen, nickel zinc, silver zinc, or other battery type/configurations. The term "battery pack" as used herein refers to multiple individual batteries contained within a single piece or multi-piece housing, the individual batteries electrically interconnected to achieve the desired voltage and capacity for a particular application. The term "electric vehicle" as used herein may refer to an all-electric vehicle, also referred to as an EV, a plug-in hybrid vehicle, also referred to as a PHEV, or a hybrid vehicle, also referred to as a HEV, where a hybrid vehicle refers to a vehicle utilizing multiple propulsion sources one of which is an electric drive system.

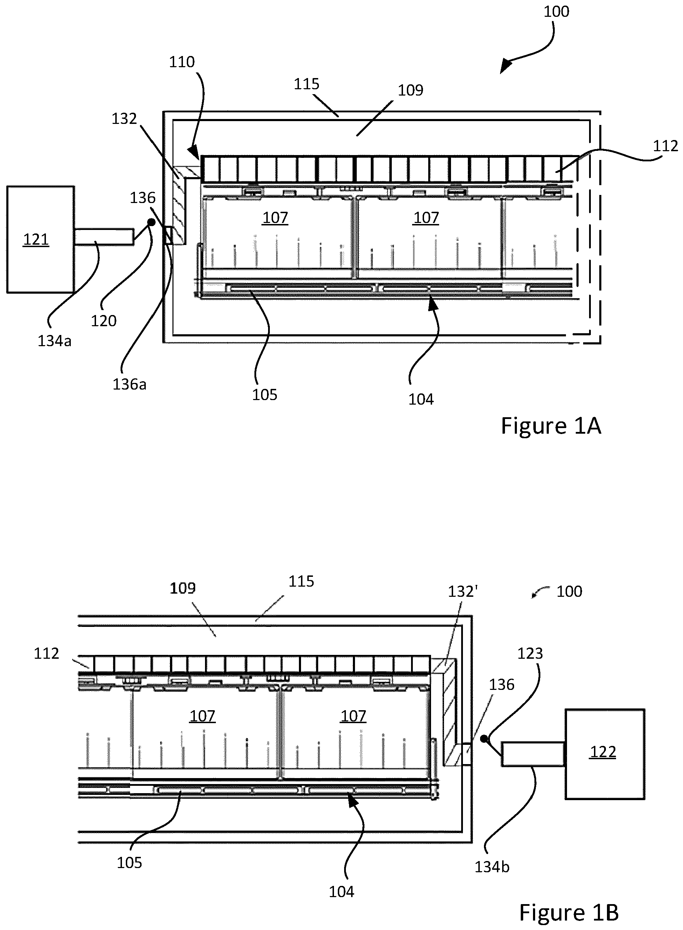

Figure 1A schematically illustrates a cross-sectional side view of at least a part of an electric vehicle (EV) battery pack 100. The dotted lines indicate that the EV battery pack 100 may be extended further (e.g. to form a full battery pack 100 together with the partial view of Figure 1B.

Figure 1A illustrates that the EV battery pack 100 may comprise a plurality of battery modules 107. The battery modules 107 may be interconnected forming rows and/or columns. The battery pack 100 herein may be referred to as a battery pack system or a battery pack arrangement. Each of said module may accommodate/comprise a plurality of battery cells (not shown). Further, Figure 1A illustrates that the EV battery pack 100 comprises a primary thermal regulation unit 104 coupled to the battery modules 107. The primary thermal regulation unit 104 is configured to control the cooling and/or heating of said battery cells. The thermal regulation unit 104 may comprise control circuitry (not shown) arranged to actively control the cooling and/or heating of said battery cells. Moreover, the battery pack 100 comprises an auxiliary thermal regulation unit 110 for providing auxiliary cooling and/or heating of said battery cells. Thus, the auxiliary thermal regulation unit 110 may be configured to support the primary thermal regulation unit 104. Moreover, the battery pack 100 further comprises a first thermal switch 120, the first thermal switch 120 having an open state and a closed state, wherein the first thermal switch is configured to, upon exceeding a pre-determined first temperature, alternate from one of said states to the other. At said closed state the first thermal switch 120 connects the auxiliary thermal regulation unit 110 to a first thermal source 121 for heating or cooling said battery cells.

In Figure 1A, the thermal switch 120 is at an open state. Thus, the thermal source 121 does not provide any thermal energy to said auxiliary thermal regulation unit 110.

As illustrated in Figure 1A, the battery pack 100 may comprise (but is not limited to having) a rigid outer shell/casing 115, representing a bottom and one or more sides of a structural vessel defining an outer structure into which the primary thermal regulation unit 104 may be positioned. Further, the outer shell 115 can include one or more structural supports, such as cross members, which can provide structural support to the battery pack 100, as well as surfaces within the outer structure on which other components of the battery pack 100 can be affixed. A variety of components can be packed into the outer structure of the battery pack structure before a cover is affixed to a top surface, thereby sealing the battery pack 100. The outer structure may be sealed in, at least in part, by a thermal packaging layer 109. The thermal packaging layer 109 may comprise a material in which insulates the battery pack 100 from the ambient environment, such as High temperature plastics, tapes, and silicone rubber, etc.

Figure 1A further illustrates that the primary thermal regulation unit 104 may comprise one or more conduits 105 through which a thermally regulated medium can flow to affect at least one of active heating or active cooling of the battery cells.

Figure 1A further illustrates that the auxiliary thermal regulation unit 110 may comprise a thermal portion 112 and a first regulation track 132 extending from said thermal portion 112, wherein the first thermal switch 120 is positioned intermediate an end 136 of said first track 132 and a thermal source connector 134a configured to, at said closed state, form a path (a thermal communication path) from the thermal source 121 to said thermal portion 112. The thermal portion 112 may be the part of the auxiliaty thermal regulation unit 110 that dissipates/transfers thermal energy (i.e cools or heats) to the battery cells. The first regulation track 132 may form (when the switch 120 is closed) the connection to the connector 134a of the thermal source 121 that allows for the transfer of thermal energy to said thermal portion 112. It should be noted that there may be a plurality of first regulation tracks 132 for connecting to one or more connectors 134a leading to a common thermal source 121.

The thermal portion 112 (regulation tracks 132 and connectors 134a) may be constructed of a highly conductive material, such as aluminum or other highly thermally conductive material. The thermal portion 112 may be positioned on top of the battery modules 107, in thermal communication. Other locations of the thermal portion 112 are contemplated such as positioning one or thermal portions 112 along the sides of the battery modules 107. In some aspects, each battery module 107 may be configured to incorporate their own individual thermal portion thermally communicative (i.e., heating or cooling may still be transferred between the thermal portions 112). The thermal portions 112 may be placed near any location within the battery pack 100. Positioning the thermal portion 112 on the opposite side (i.e. on an opposing surface of the battery module 107 relative the primary thermal regulation unit 104) of the primary thermal regulation unit 104 may be desirable for most efficient thermal regulation.

Figure 1A further illustrates that the end 136 of said first regulation track 132 may comprise a thermal plate insert 136a, the thermal plate insert 136a being fitted to close an opening of a casing 105 of said battery pack 100, wherein the first thermal switch 120 is positioned intermediate an outer surface of said thermal plate insert 136a and said thermal source connector 134a.

The thermal portion 112 may be at least one of a heat sink associated with said battery module, a battery module casing of said module, a part of said battery module casing, the outer shell 115 and a busbar arrangement.

The thermal switch 120 may be positioned within the outer shell 115 of the battery pack 100 or outside the outer shell 115 as illustrated in Figure 1A. In some aspects, the thermal switch 120 may be directly coupled to the thermal portion 112, thus the regulation track 132 or connector 134a may be a single common connector track.

Figure 1B illustrates a side cross-sectional view of the battery pack 100, Figure 1B illustrates that the battery pack 100 is a part of the battery pack 100 illustrated in Figure 1A. Figure 1B illlustrates that the battery pack 100 may comprise further thermal switches 120 i.e. at least a second thermal switch 123 having an open state and a closed state. The second thermal switch 123 is configured to, upon exceeding a pre-determined second temperature, alternate from one of said states to the other. At said closed state of the second thermal switch 123, the second thermal switch 123 connects the auxiliary thermal regulation unit 110 to a second thermal source 122 for heating or cooling said battery cells, wherein the first temperature is different from said second temperature. In some aspects the first and the second temperature may be the same.

One of the first and the second thermal sources 121, 122 illustrated in Figures 1A-B may be a cooling source for cooling the battery cells and the other of the thermal sources is a heating source for heating the battery cells. However, in some aspects, both may be either heating or cooling sources. Accordingly, the thermal portion 112 may be used as a common thermal transfer source for both heating and cooling from several thermal sources 121, 122 (depending on the state of the switches). As further illustrated in Figure 1B, the second thermal source 122, may similar to the first one 121 comprise a connector 134b, further the auxiliary thermal regulation unit 110 may comprise a further/second thermal regulation track 132', the second switch 123 may at said closed state, close the circuit for thermally connecting the source 122 to the thermal portion 112. The battery pack 100 may further comprise third, fourth etc. thermal switches with third tracks etc. Thus, the present disclosure is not limited to one or two such.

The first and second temperatures may be different, in some aspect, the first temperature may be -20-0 degrees Celsius and the second temperature may be 40-60 degrees Celsius. Thus, upon falling under 0 degrees Celsius, the first switch 120 may close to allow conductive heat transfer from the thermal source 121 (being a heat source in this case). Also, conversely, if the temperature exceeds e.g. 40 degrees Celsius, the second switch 123 may close to allow conductive thermal transfer from the thermal source 122 (in this case being a cooling source). Accordingly, the thermal switches 120, 123 may be configured to alternate states upon pre-defined temperatures. The thermal switches 120, 123 may be, but are not limited to bimetal switches.

It should be noted that the primary and auxiliary thermal regulation unit 110, 103 as well as the one or more thermal switches 120 may be referred to as a cooling arrangement (comprising said components) coupled to the battery pack 100. In other aspects, they may be comprised by the battery pack 100.

Even though the first thermal switch 120 is referred to a "first" thermal switch 120, the battery pack 100 may comprise a plurality of thermal switches 120 each having a separate or common regulation track 132 coupled to a separate or common connector 134a.

It should further be noted that the primary and auxiliary thermal regulation units 104, 110 may be configured to operate complementary to each other to enhance heating or cooling operations.

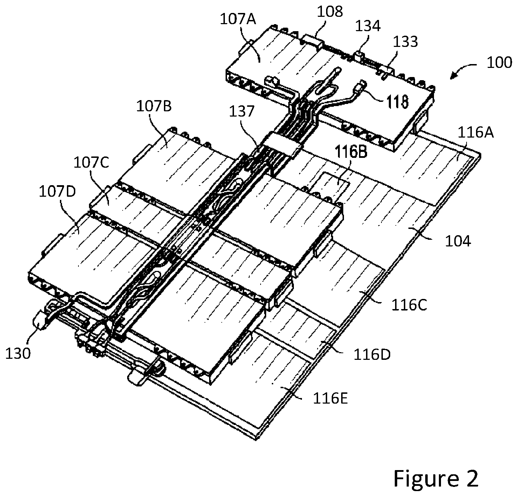

Figure 2 illustrates an objective view of a battery pack 100 in accordance with aspects herein in which the auxiliary thermal regulation unit 110 is not visible. In addition to the battery modules 107A-D, the battery pack 100 can comprise a number of other electrical components, including an electrical current transmission system 108, safety system 130, battery management system 134, current management system 133, and a battery busbar arrangement 137 interconnecting the various components 107A-F, 108, 130, 134, and 133.

The primary thermal regulation unit 104 may be configured as an active heating or cooling panel, which can be positioned in relative proximity or distance to the battery modules 107A-D to affect a desired degree of heating or cooling. For improved efficiency, rather than actively heating or cooling an entire surface of the primary thermal regulation unit 104, the primary thermal regulation unit 104 may include a plurality of contact pads 116A-E configured to contact portions of the battery modules 106A-D. The one or more contact pads 116A-E may be constructed of a highly conductive material, such as aluminum or other highly thermally conductive material. To affect active heating or cooling primary thermal regulation unit 104 can define one or more conduits 105, as illustrated in Figures 1A-1B, to which a thermal regulation fluid or medium can flow. The primary thermal regulation unit 104 may be positioned adjacent to/in contact with a bottom surface of the battery modules 106A/D.

Further referring to Figure 2, the thermal portion 112 may in some aspects herein be the busbar arrangement 137 for providing a more compact auxiliary cooling of the battery modules 107A-D. Thus, the busbar arrangement 137 may in some aspects be coupled to one or more thermal switches 120 (by means of e.g. a thermal regulation path), wherein each thermal switch 120 (e.g. the first thermal switch 120) is coupled to a thermal source (or connector thereof).

Further, as illustrated in Figure 2, the battery management system 134 or other components of the multi-cell battery pack can include one or more sensors 118 for monitoring a physical state of the individual cells during operation. Such sensors 118 include, but are not limited to measurement of temperature, pressure, voltage, amperage, and other ambient conditions (e.g., the presence of smoke or fumes, the presence of liquid, etc.) within the battery pack 100. Data from the sensors 118 can be used by hardware and software to make intelligent decisions to control a characteristic of the individual cells, so that the characteristic within any individual cell stays within an acceptable operating range. Additionally, the battery management system 134, sometimes in combination with other systems may be configured to enable information gathered by the one or more sensors 118 to flow into and out of the battery pack 100. In some embodiments, the battery management system 134 can include mixed signal integrated circuits that incorporate both analog and digital circuits, such as one or more types of digital memory and special registers to hold battery data. The sensors 118 may be temperature sensor used for controlling the heating and cooling operation of the primary thermal regulation unit 104.

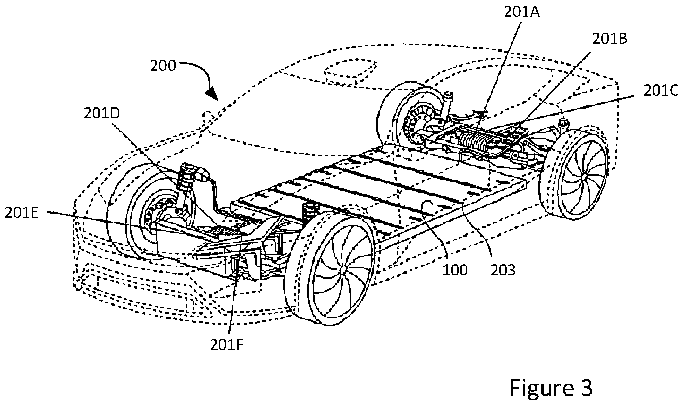

Figure 3 illustrates an objective view of an EV 200 in accordance with aspects herein. The assembled battery pack 100 can be mounted to the frame or chassis 203 of the vehicle 200 and in some embodiments can be positioned adjacent to a cabin floor of the vehicle 200, thereby maintaining a low centre of gravity. For example, the battery pack 200 may be positioned below the passenger compartment, which is generally considered an ideal location as the battery pack 200 maintains a low centre of gravity of the vehicle 200 and is spaced away from the outer body of the vehicle, and therefore less prone to being damaged in a collision. In embodiments, the electric vehicle 200 may comprise a variety of components 201A-F enabling various performance aspects of the vehicle 100. Examples include a rear electronic motor with power electronics 201A, a DC/DC converter 201B, an on board charger 201C, a high voltage auxiliary heater 201D, a high voltage compressor 201E, a front electronic motor with power electronics 201F and more. These and other various components may be in thermal communication with the battery pack 100 (i.e. forming thermal sources 121, 122) as illustrated herein and, more particularly, illustrated in FIGS. 1A-B.

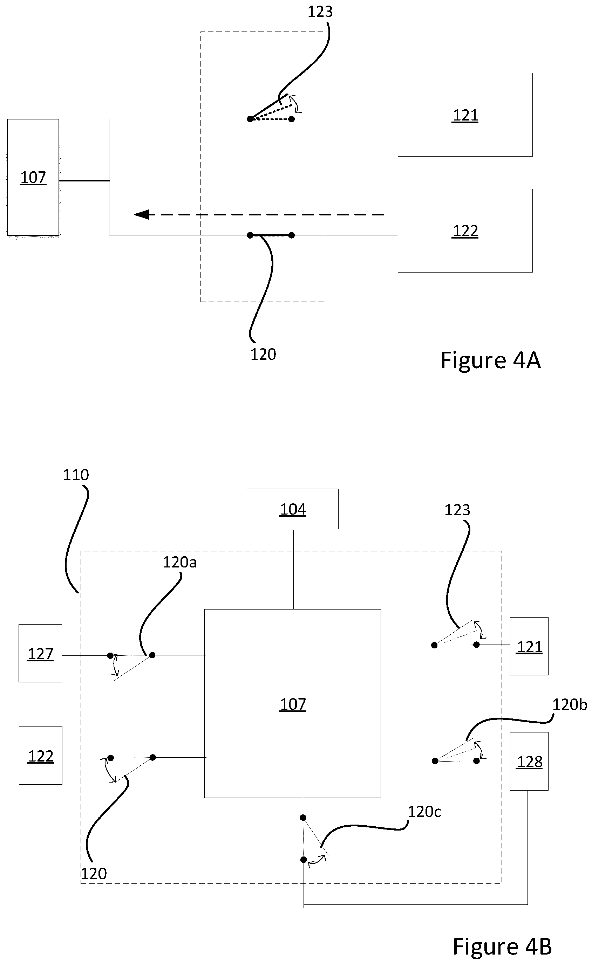

Figure 4A schematically illustrates block circuits of the switches 123, 120, the first switch in a closed position and the second 123 in an open position. Each switch 120, 123 being connected to a thermal source 121, 122. When closing the circuit, the switches may provide thermal energy to the battery cells/battery modules.

Figure 4B schematically illustrates block circuits in accordance with some aspects herein. Figure 4B illustrates that the primary thermal regulation unit 104 may provide active cooling controlled by control circuitry of the battery pack 100. Further, Figure 4B illustrates that the battery pack 100 may comprise a plurality of switches 120, 120a-c, 123 (which may be referred to as a first, second, third, fourth, fifth). Each switch may be, at its closed state, thermally connected to an individual thermal source 121, 127, 122 and/or at least some of the switches 120c, 120b of said plurality of switches 120, 120a-c, 123 may be connected to a common thermal source 128 (then the switches 120c, 120b may be configured to open/close upon reaching common or similar temperatures). Such an arrangement comprising a plurality of switches 120, 120a-c, 123 allows for cooling/heating from a plurality of thermal sources 121, 122, 127, 128. Further, it allows for distributing the cooling/heating from a single thermal source by having at least a pair of switches directly or indirectly coupled to different parts of a thermal portion 112 of said auxiliary thermal regulation unit 110. Thus, the battery pack 100 may in some aspects comprise a plurality of thermal switches 120, 120a-c, 123, each thermal switch having an open state and a closed state, wherein each thermal switch is configured to, upon exceeding a pre-determined temperature, alternate from one of said states to the other, wherein at said closed state of each switch, said thermal switch connects the auxiliary thermal regulation unit to a thermal source 121, 122, 127, 128 for heating or cooling said battery cells. At least some (e.g. at least one or two) of the plurality of thermal switches 120, 120a-c, 123 may connect the auxiliary thermal regulation unit 110 to individual thermal sources. Further, as shown in Figure 4B, additionally or alternatively, some of the thermal switches 120, 120a-c, 123 (e.g. a pair or more) of the plurality of thermal switches may connect the auxiliary thermal regulation unit to a common thermal source 121, 122, 127, 128.

The person skilled in the art realizes that the present disclosure by no means is limited to the aspects described above. The features of the described aspects may be combined in different ways, and many modifications and variations are possible within the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. An electric vehicle battery pack (100), comprising:
- a battery module (107) comprising a plurality of battery cells;
- a primary thermal regulation unit (104) coupled to the battery module (107), wherein the primary thermal regulation unit (104) is configured to control the cooling and/or heating of said battery cells;
- an auxiliary thermal regulation unit (110) for providing auxiliary cooling and/or heating of said battery cells;
- a first thermal switch (120), the first thermal switch (120) having an open state and a closed state, wherein the first thermal switch is configured to, upon exceeding a pre-determined first temperature, alternate from one of said states to the other, wherein at said closed state the first thermal switch (120) connects the auxiliary thermal regulation unit (110) to a first thermal source (121) for heating or cooling said battery cells.

2. The electric vehicle battery pack (100) according to claim 1, further comprising a second thermal switch (123) having an open state and a closed state, wherein the second switch (123) is configured to, upon exceeding a pre-determined second temperature, alternate from one of said states to the other, wherein at said closed state of the second thermal switch (123), the second thermal switch connects the auxiliary thermal regulation unit (110) to a second thermal source (122) for heating or cooling said battery cells, wherein the first temperature is different from said second temperature.

3. The electric vehicle battery pack (100) according to any one of the claims 1 or 2, wherein one of the first and the second thermal sources (121, 122) is a cooling source for cooling the battery cells and wherein the other of the thermal sources (121, 122) is a heating source for heating the battery cells,.

4. The electric vehicle battery pack (100) according to any one of the preceding claims, wherein the first and/or the second thermal switch (120, 123) is a bimetal switch.

5. The electric vehicle battery pack (100) according to any one of the preceding claims, wherein the thermal source (121, 122) is an ambient source, the ambient source being at least one of ambient air, a vehicle chassis, vehicle frame and electronic elements, electronic elements comprising a rear electronic motor, a DC/DC converter, an on board charger, a high voltage compressor, a front electronic motor, an inverter and any other suitable electronic elements.

6. The electric vehicle battery pack (100) according to any one of the preceding claims wherein the primary thermal regulation unit (104) comprises one or more conduits (105) through which a thermally regulated medium can flow to affect at least one of active heating or active cooling of the battery cells.

7. The electric vehicle battery pack (100) according to any one of the preceding claims, wherein the auxiliary thermal regulation unit (110) is arranged to provide conductive cooling and/or heating.

8. The electric vehicle battery pack (100) according to any one of the preceding claims, wherein the auxiliary thermal regulation unit (110) comprises a thermal portion (112) and a first regulation track (132) extending from said thermal portion (112), wherein the first thermal switch (120) is positioned intermediate an end (136) of said first track (132) and a thermal source connector (134b) to, at said closed state, form a path from the thermal source to said thermal portion.

9. The electric vehicle battery pack (100) according to claim 8, wherein the thermal portion (112) is one of a heat sink associated with said battery module, a battery module casing of said module, a part of said battery module casing and a busbar arrangement (137).

10. The electric vehicle battery pack (100) according to claim 8 or 9, wherein the battery module (107) is accommodated by said battery pack (100).

11. The electric vehicle battery pack (100) according to claim 9, wherein the end (136) of said first regulation track (132) comprises a thermal plate insert (136a), the thermal plate insert (136a) being fitted to close an opening of a casing (105) of said battery pack (100), wherein the first thermal switch (120) is positioned intermediate an outer surface of said thermal plate insert (136a) and said thermal source connector (134a).

12. The electric vehicle battery pack (100) according to any one of the preceding claims, wherein the battery pack (100) comprises a plurality of interconnected battery modules (107).

13. The electric vehicle battery pack (100) according to claim 12, wherein the auxiliary thermal regulation unit (110) comprises a thermal portion (112) defined by a busbar arrangement (137) interconnecting said battery modules (107) and a first regulation track (132) extending from said thermal portion, wherein the first thermal switch is positioned intermediate an end of said first track (132) and a thermal source connector (134b) to, at said closed state, form a path from the thermal source to said busbar arrangement.

14. The electric vehicle battery pack (100) according to any one of the preceding claims, wherein the auxiliary thermal regulation unit (110) and the primary regulation unit (104) are positioned to heat and/or cool opposing or different surfaces of said battery module (107).

15. An electric vehicle (200) comprising the electric vehicle battery pack (100) in accordance with any one of the preceding claims.
